# FASCICULE DE BREVET EUROPEEN

(11) **EP 2 581 119 B1**
(45) Date de publication et mention de la délivrance du brevet: **25.06.2014**
(21) Numéro de dépôt: 12187877.1
(22) Date de dépôt: 10.10.2012
(51) Int. Cl.: A63B 63/00, F16G 11/10, A63B 61/00, A63B 61/02, A63B 61/04

(54) **Dispositif de fixation d'un filet comportant un surjetage à un support**
Vorrichtung zur Befestigung eines Netzes mit einer Overlocknaht auf einem Träger
Device for attaching a net comprising overlocking to a mounting

(30) Priorité: 13.10.2011 FR 1159245
(43) Date de publication de la demande: 17.04.2013
(73) Titulaire: ACL Sport Nature, 56380 Beignon (FR)
(72) Inventeur: David, Michel, 56380 Beignon (FR)
(74) Mandataire: Maillet, Alain

(56) Documents cités:
- DE-A1- 3 942 607
- DE-U1-202010 014 693
- US-A- 5 765 787

## Description

La présente invention concerne un dispositif de fixation d'un filet comportant un surjetage dans un support comportant une fente, un ensemble de séparation ou de protection comportant un support, un filet et au moins un tel dispositif de fixation, ainsi qu'une cage comportant un support, un filet et au moins un tel dispositif de fixation.

L'invention s'applique plus particulièrement dans le domaine des équipements sportifs tels que des cages ou des filets de séparation ou de protection.

Une cage que ce soit au football ou au handball comporte trois supports, deux constituant les montants verticaux et un constituant la traverse horizontale, sur lesquels un filet est fixé.

Dans le cas de l'état de la technique, des crochets ouverts sont fixés sur les montants et la traverse et le surjetage du filet est inséré à l'intérieur de chacun des crochets pour y être maintenu.

Les crochets sont généralement fixés à environ 30 cm les uns des autres et il peut arriver que l'un des crochets se casse ou que le surjetage sorte de l'un des crochets. Le filet est alors détaché à ce niveau et il baille.

Le document DE-A-39 42 607 divulgue un dispositif de fixation pour un filet.

Un objet de la présente invention est de proposer un dispositif de fixation d'un filet comportant un surjetage dans un support comportant une fente qui ne présente pas les inconvénients de l'art antérieur et qui en particulier assure une fixation complète du surjetage sur toute sa longueur.

A cet effet, est proposé un dispositif de fixation destiné à fixer un filet comportant un surjetage à un support comportant une fente délimitée par deux bords, ledit dispositif de fixation prenant la forme d'un profilé et comportant :
- un corps présentant deux parois latérales et un fond reliant les deux parois latérales entre elles et destiné à recevoir ledit surjetage,
- pour chaque paroi latérale, une rainure s'étendant sur la face extérieure de ladite paroi latérale et destinée à loger l'un desdits bords, et
- au moins une languette, la ou chaque languette étant solidaire de la face intérieure d'une paroi latérale et s'étendant, d'une part, en direction du fond, et, d'autre part, en direction de la face intérieure de la paroi latérale opposée de manière à obturer au moins en partie l'espace entre les deux parois latérales, et à ce que l'espace ainsi réduit soit inférieur au diamètre du surjetage lorsque ledit dispositif de fixation est en place dans ladite fente.

Avantageusement, la distance entre la ou les extrémités libres et le fond est supérieure au diamètre du surjetage.

Avantageusement, les parois latérales s'évasent à partir du fond de manière à ce que la distance entre les fonds des rainures soit supérieure à la largeur de la fente.

Avantageusement, le dispositif de fixation comporte, pour chaque paroi latérale, une aile s'étendant vers l'extérieur à partir de la face extérieure de ladite paroi latérale et étant disposée du côté opposé au fond par rapport à la rainure située sur la même face extérieure, chaque aile étant prévue pour venir en appui contre le support.

Avantageusement, le dispositif de fixation comporte, pour chaque paroi latérale, une rainure d'extraction disposée sur la face extérieure de ladite paroi latérale, et du côté opposé au fond par rapport à la rainure située sur la même face extérieure ou, lorsqu'elle est présente, par rapport à l'aile située sur la même face extérieure.

L'invention propose également un ensemble de séparation ou de protection comportant:
- un support constitué de deux barres, chacune présentant une fente délimitée par deux bords,
- un filet présentant un surjetage, et
- pour chaque barre, un dispositif de fixation selon l'une des variantes précédentes et destiné à fixer ledit surjetage à ladite barre.

L'invention propose également une cage délimitant un but et comportant:
- un support présentant deux barres verticales et une barre horizontale reliant lesdites deux barres verticales, chaque barre présentant une fente délimitée par deux bords,
- un filet présentant un surjetage, et
- pour chaque barre, un dispositif de fixation selon l'une des variantes précédentes et destiné à fixer ledit surjetage à ladite barre.

Avantageusement, le support comporte en outre une base reposant sur le sol et constituée de trois barres horizontales solidaires, et pour chacune desdites trois barres horizontales, la cage comporte un dispositif de fixation selon l'une des variantes précédentes et destiné à fixer ledit surjetage à ladite barre horizontale.

Avantageusement, le support comporte, pour chaque barre verticale, un coude assurant la liaison entre la barre horizontale et ladite barre verticale, et un dispositif de blocage fixé audit support et prenant en sandwich l'extrémité du dispositif de fixation avec le support.

Avantageusement, le dispositif de blocage présente des échancrures, chacune permettant le passage d'une maille du filet.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
les Figs. 1 à 3 présentent des vues en coupe d'un équipement selon l'invention pour différentes étapes d'installation d'un filet sur un support,
la Fig. 4 est une vue similaire à celles des Figs. 1 à 3 mais montrant le démontage du filet,
la Fig. 5 est un agrandissement du dispositif de fixation selon l'invention, et
la Fig. 6 est un détail d'une cage selon l'invention.

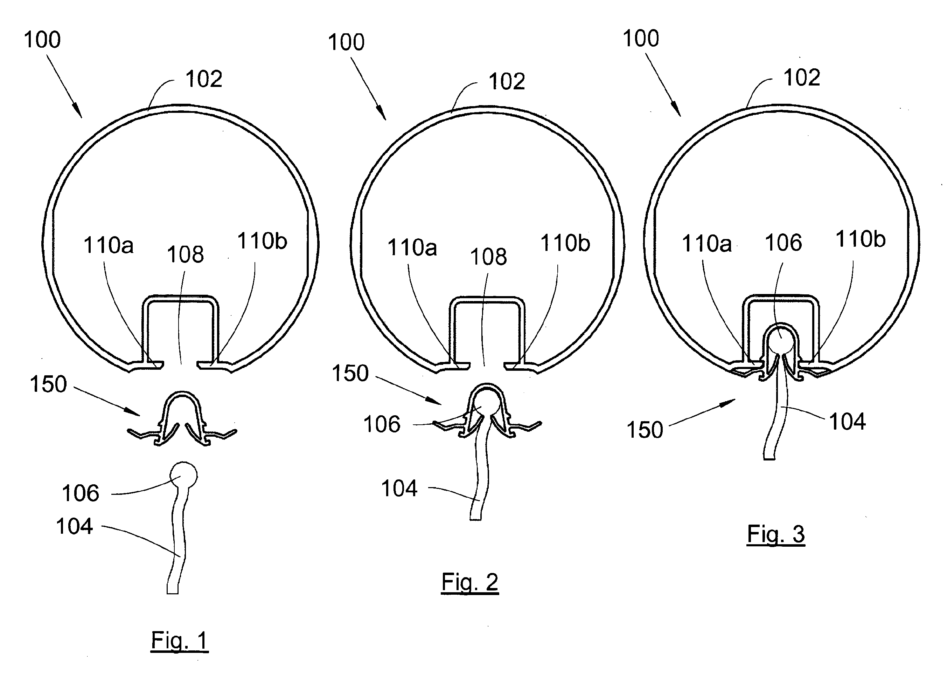

La Fig. 1 montre un équipement 100 comportant:
- un support 102,
- un filet 104, et
- un dispositif de fixation 150 destiné à fixer le filet 104 au support 102.

Dans le cas particulier où l'équipement 100 est un filet de séparation par exemple au volley-ball ou au tennis, le support 102 est constitué de deux barres verticales, et il y a un dispositif de fixation 150 pour chaque barre verticale.

L'équipement 100 peut également être un ensemble de protection qui vient se placer devant un élément à protéger tel qu'un mur ou un toit. L'ensemble de protection 100 comprend alors deux barres qui suivent l'inclinaison de l'élément à protéger, un filet 104 et pour chaque barre, un dispositif de fixation 150.

Dans la suite de la description, le support 102 est une poutre.

Le filet 104 présente un surjetage 106 qui s'étend sur le pourtour du filet 104 et qui constitue une bordure épaisse par rapport à la zone centrale constituée des mailles. Comme cela est expliqué ci-après, c'est le surjetage 106 qui est fixé à la poutre 102.

La poutre 102 présente une fente 108 qui s'étend au moins sur la longueur sur laquelle le surjetage 106 doit être fixé à la poutre 102. La fente 108 est délimitée par deux bords 110a et 110b issus de la poutre 102.

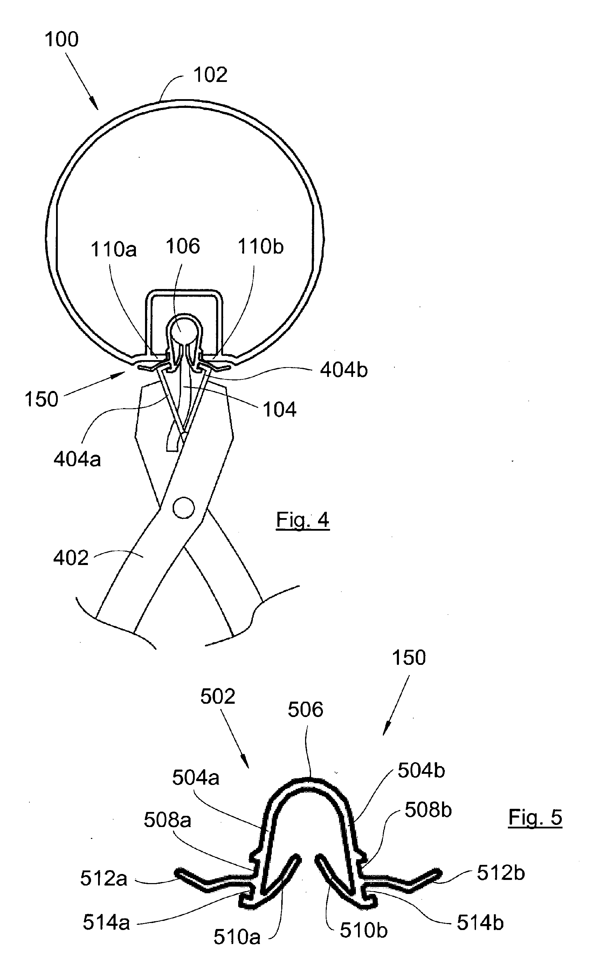

La Fig. 5 montre un agrandissement du dispositif de fixation 150. Le dispositif de fixation 150 se présente sous la forme d'un profilé réalisé dans un matériau comme par exemple du PVC. La longueur du profilé est au moins égale à la longueur du surjetage 106 devant être fixé à la poutre 102.

Le dispositif de fixation 150 comporte:
- un corps 502 souple présentant deux parois latérales 504a et 504b et un fond 506 reliant les deux parois latérales 504a et 504b entre elles pour former un U,
- pour chaque paroi latérale 504a, 504b, une rainure 508a, 508b s'étendant le long du profilé sur la face extérieure de ladite paroi latérale 504a, 504b, et
- au moins une languette 510a, 510b, la ou chaque languette 510a, 510b étant solidaire de la face intérieure d'une paroi latérale 504a, 504b et s'étendant en direction du fond 506.

Le corps 502 et plus particulièrement le fond 506 est destiné à recevoir le surjetage 106. Le corps 502 est souple car comme cela est expliqué ci-après, il doit pouvoir se plier pour s'insérer dans la poutre 102.

La Fig. 2 montre l'introduction du surjetage 106 dans le dispositif de fixation 150.

Lors de cette introduction, le surjetage 106 écarte les extrémités libres des languettes 510a et 510b et il est poussé vers le fond 506. Les languettes 510a et 510b se referment ensuite à l'arrière du surjetage 106 en se refermant sur les mailles du filet 104 et en emprisonnant le surjetage 106.

La Fig. 3 montre l'introduction du dispositif de fixation 150 et du filet 104 dans la poutre 102.

Le fond 506 est introduit dans la fente 108 jusqu'à ce que chaque bord 110a, 110b se loge dans une des rainures 508a et 508b.

Dans le cas où il y a une seule languette 510a, 510b, cette dernière s'étend de manière à ce que la distance entre son extrémité libre et la face intérieure de la paroi latérale 504b, 504a opposée soit inférieure au diamètre du surjetage 106 lorsque le dispositif de fixation 150 est en place dans la fente 108.

Dans le mode de réalisation de l'invention présenté ici, le dispositif de fixation 150 est symétrique et il comporte deux languettes 510a et 510b. Dans ce cas, les languettes 510a et 510b s'étendent de manière à ce que la distance entre leurs extrémités libres soit inférieure au diamètre du surjetage 106 lorsque le dispositif de fixation 150 est en place dans la fente 108.

Plus généralement, la ou chaque languette 510a, 510b s'étend en direction de la face intérieure de la paroi latérale 504b, 504a opposée de manière à obturer au moins en partie l'espace entre les deux parois latérales 504a et 504b, et à ce que l'espace ainsi réduit soit inférieur au diamètre du surjetage 106 lorsque le dispositif de fixation 150 est en place dans la fente 108.

La distance entre la ou les extrémités libres et le fond 506 est supérieure au diamètre du surjetage 106 afin de pouvoir le loger.

Dans le mode de réalisation de l'invention présenté ici, le fond 506 est arqué et son diamètre est tel que le surjetage 106 puisse y être logé. La largeur de la fente 108 est supérieure à la largeur du fond 506 afin qu'il puisse être introduit dans ladite fente 108.

Les deux rainures 508a et 508b sont en vis-à-vis et chaque rainure 508a, 508b est destinée à recevoir l'un des bords 110a et 110b délimitant la fente 108.

Le filet 104 est ainsi fixé tout le long de la fente 108 et la ou les languettes 510a et 510b empêchent le retrait même partiel du surjetage 106. Le tirage du filet 104 entraîne en outre un resserrement de la ou des languettes 510a et 510b évitant ainsi le retrait du filet 104.

La mise en place du filet 104 est donc aisée et elle peut se faire simplement sans qu'il soit nécessaire de démonter la poutre 102.

Pour assurer un meilleur maintien du dispositif de fixation 150 dans la poutre 102, les parois latérales 504a et 504b s'évasent à partir du fond 506 de manière à ce que la distance entre les fonds des rainures 508a et 508b soit supérieure à la largeur de la fente 108. Ainsi du fait de l'élasticité du corps 502, les parois latérales 504a et 504b exercent une pression contre les bords 110a et 110b.

Dans un mode de réalisation particulier, la distance entre les fonds des rainures 508a et 508b est de l'ordre de 15 mm et la largeur de la fente 108 est de l'ordre de 13 mm.

Pour assurer la stabilité du dispositif de fixation 150 sur la poutre 102, le dispositif de fixation 150 comporte, pour chaque paroi latérale 504a, 504b, une aile 512a, 512b s'étendant vers l'extérieur à partir de la face extérieure de ladite paroi latérale 504a, 504b. Chaque aile 512a, 512b est disposée du côté opposé au fond 506 par rapport à la rainure 508a, 508b située sur la même face extérieure.

Chaque aile 512a, 512b présente une forme telle que lorsque le dispositif de fixation 150 est en place dans la fente 108, chaque aile 512a, 512b est en appui contre le support 102 (voir Fig. 3). Chaque aile 512a, 512b exerce ainsi une force qui tend à faire ressortir le dispositif de fixation 150 de la fente 108.

Dans le mode de réalisation de l'invention présenté sur les Figs., chaque aile 512a, 512b présente un profil qui oriente leur extrémité libre vers la poutre 102.

La Fig. 4 montre le retrait du dispositif de fixation 150 de la poutre 102 à l'aide d'une pince 402 présentant deux mâchoires 404a et 404b. Les mâchoires 404a et 404b viennent resserrer les parois latérales 504a et 504b afin de désengager les rainures 508a et 508b des bords 110a et 110b.

Afin d'assurer le positionnement des mâchoires 404a et 404b pendant le resserrement des parois latérales 504a et 504b et faciliter l'extraction du dispositif de fixation 150, celui-ci comporte, pour chaque paroi latérale 504a, 504b, une rainure d'extraction 514a, 514b disposée sur la face extérieure de ladite paroi latérale 504a, 504b, et du côté opposé au fond 506 par rapport à la rainure 508a, 508b située sur la même face extérieure ou, lorsqu'elle est présente, par rapport à l'aile 512a, 512b située sur la même face extérieure.

Chaque rainure d'extraction 514a, 514b est destinée à recevoir une mâchoire 404a, 404b différente.

Le retrait du filet 104 est donc aisé et il peut se faire simplement sans qu'il soit nécessaire de démonter la poutre 102.

L'invention peut être plus particulièrement mise en oeuvre dans le cadre d'une cage délimitant un but. La cage comporte alors:
- le support 102 qui présente deux barres verticales et une barre horizontale reliant lesdites deux barres verticales, chaque barre présentant la fente 108 délimitée par les deux bords 110a et 110b,
- le filet 104 présentant le surjetage 106, et
- pour chaque barre, un dispositif de fixation 150 destiné à fixer ledit surjetage 106 à ladite barre.

La cage peut être une cage transportable qui prend alors la forme d'une équerre. Le support 102 comporte alors en outre une base qui repose sur le sol et qui est constituée de trois barres horizontales solidaires les unes des autres et formant un rectangle.

La cage présente alors pour chacune desdites trois barres horizontales, un dispositif de fixation 150 destiné à fixer ledit surjetage 106 à ladite barre horizontale.

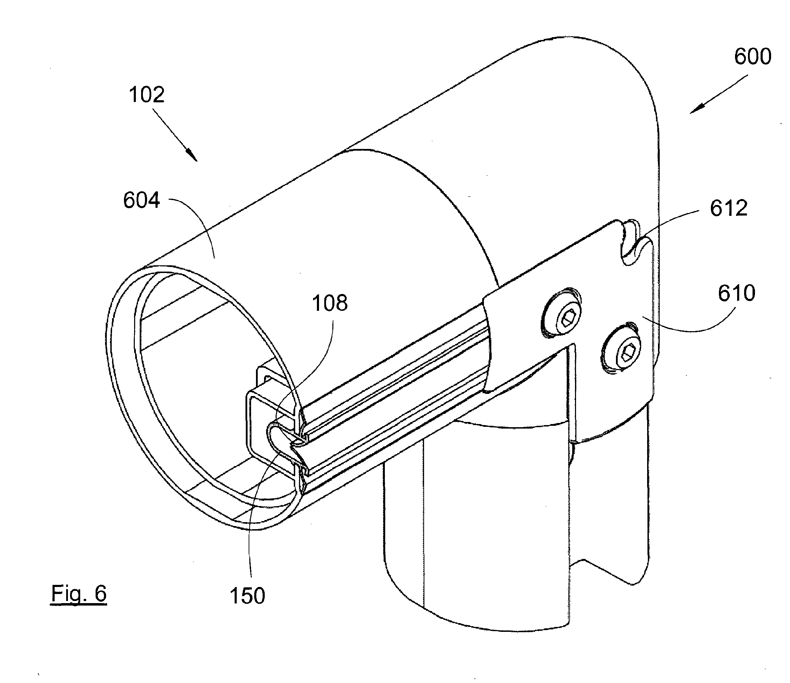

La Fig. 6 montre un coude 600 d'une cage. Chaque coude 600 appartient au support 102 et assure la liaison entre l'une des barres verticales qui n'est pas représentée ici et la barre horizontale 604 qui porte le dispositif de fixation 150 selon l'invention mais où le filet 104 n'a pas été représenté.

Pour éviter que le dispositif de fixation 150 sorte de la fente 108 de manière involontaire, un dispositif de blocage 610 qui prend ici la forme d'une plaque, est fixé au niveau de chaque coude 600 et appuie sur l'extrémité du dispositif de fixation 150. Le dispositif de blocage 610 prend ainsi l'extrémité du dispositif de fixation 150 en sandwich avec le support 102.

Pour permettre le passage du filet, le dispositif de blocage 610 présente des échancrures 612 chacune permettant le passage d'une maille du filet 104.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas d'un support 102 rectiligne, mais elle s'applique de la même manière si le support est arqué.

## Revendications

1. Dispositif de fixation (150) destiné à fixer un filet (104) comportant un surjetage (106) à un support (102) comportant une fente (108) délimitée par deux bords (110a, 110b), ledit dispositif de fixation (150) prenant la forme d'un profilé et comportant :
- un corps (502) présentant deux parois latérales (504a, 504b) et un fond (506) reliant les deux parois latérales (504a, 504b) entre elles et destiné à recevoir ledit surjetage (106),
- pour chaque paroi latérale (504a, 504b), une rainure (508a, 508b) s'étendant sur la face extérieure de ladite paroi latérale (504a, 504b) et destinée à loger l'un desdits bords (110a, 110b), et
- au moins une languette (510a, 510b), la ou chaque languette (510a, 510b) étant solidaire de la face intérieure d'une paroi latérale (504a, 504b) et s'étendant, d'une part, en direction du fond (506), et, d'autre part, en direction de la face intérieure de la paroi latérale (504b, 504a) opposée de manière à obturer au moins en partie l'espace entre les deux parois latérales (504a, 504b), et à ce que l'espace ainsi réduit soit inférieur au diamètre du surjetage (106) lorsque ledit dispositif de fixation (150) est en place dans ladite fente (108).

2. Dispositif de fixation (150) selon la revendication 1, **caractérisé en ce que** la distance entre la ou les extrémités libres et le fond (506) est supérieure au diamètre du surjetage (106).

3. Dispositif de fixation (150) selon l'une des revendications 1 ou 2, **caractérisé en ce que** les parois latérales (504a, 504b) s'évasent à partir du fond (506) de manière à ce que la distance entre les fonds des rainures (508a, 508b) soit supérieure à la largeur de la fente (108).

4. Dispositif de fixation (150) selon l'une des revendications 1 à 3, **caractérisé en ce qu'**il comporte, pour chaque paroi latérale (504a, 504b), une aile (512a, 512b) s'étendant vers l'extérieur à partir de la face extérieure de ladite paroi latérale (504a, 504b) et étant disposée du côté opposé au fond (506) par rapport à la rainure (508a, 508b) située sur la même face extérieure, chaque aile (512a, 512b) étant prévue pour venir en appui contre le support (102).

5. Dispositif de fixation (150) selon l'une des revendications 1 à 4, **caractérisé en ce qu'**il comporte, pour chaque paroi latérale (504a, 504b), une rainure d'extraction (514a, 514b) disposée sur la face extérieure de ladite paroi latérale (504a, 504b), et du côté opposé au fond (506) par rapport à la rainure (508a, 508b) située sur la même face extérieure ou, lorsqu'elle est présente, par rapport à l'aile (512a, 512b) située sur la même face extérieure.

6. Ensemble de séparation ou de protection (100) comportant:
- un support (102) constitué de deux barres, chacune présentant une fente (108) délimitée par deux bords (110a, 110b),
- un filet (104) présentant un surjetage (106), et
- pour chaque barre, un dispositif de fixation (150) selon l'une des revendications précédentes et destiné à fixer ledit surjetage (106) à ladite barre.

7. Cage délimitant un but et comportant:
- un support (102) présentant deux barres verticales et une barre horizontale reliant lesdites deux barres verticales, chaque barre présentant une fente (108) délimitée par deux bords (110a, 110b),
- un filet (104) présentant un surjetage (106), et
- pour chaque barre, un dispositif de fixation (150) selon l'une des revendications 1 à 5 et destiné à fixer ledit surjetage (106) à ladite barre.

8. Cage selon la revendication 7, **caractérisée en ce que** le support (102) comporte en outre une base reposant sur le sol et constituée de trois barres horizontales solidaires, et **en ce que**, pour chacune desdites trois barres horizontales, la cage comporte un dispositif de fixation (150) selon l'une des revendications 1 à 5 et destiné à fixer ledit surjetage (106) à ladite barre horizontale.

9. Cage selon l'une des revendications 7 ou 8, **caractérisée en ce que** le support (102) comporte, pour chaque barre verticale, un coude (600) assurant la liaison entre la barre horizontale (604) et ladite barre verticale, et un dispositif de blocage (610) fixé audit support (102) et prenant en sandwich l'extrémité du dispositif de fixation (150) avec le support (102).

10. Cage selon la revendication 9, **caractérisée en ce que** le dispositif de blocage (610) présente des échancrures (612), chacune permettant le passage d'une maille du filet (104).

## Patentansprüche

1. Befestigungsvorrichtung (150), dazu bestimmt, ein Netz (104), das eine Overlocknaht (106) aufweist, an einer Trageinrichtung (102) zu befestigen, die einen Spalt (108) aufweist, der durch zwei Ränder (110a, 110b) begrenzt wird, wobei die Befestigungsvorrichtung (150) die Form eines Profils annimmt und aufweist:
- einen Körper (502), der zwei seitliche Wände (504a, 504b) und einen Boden (506) aufweist, der die beiden seitlichen Wände (504a, 504b) miteinander verbindet und dazu bestimmt ist, die Overlocknaht (106) aufzunehmen,
- für jede seitliche Wand (504a, 504b) eine Nut (508a, 508b), die sich auf der Außenseite der seitlichen Wand (504a, 504b) erstreckt und dazu bestimmt ist, einen der Ränder (110a, 110b) aufzunehmen, und
- mindestens eine Zunge (510a, 510b), wobei die oder jede Zunge (510a, 510b) mit der Innenseite einer seitlichen Wand (504a, 504b) einstückig verbunden ist und sich einerseits in Richtung des Bodens (506) und andererseits in Richtung der Innenseite der gegenüberliegenden seitlichen Wand (504a, 504b) erstreckt, sodass der Raum zwischen den zwei seitlichen Wänden (504a, 504b) zumindest teilweise verschlossen wird und sodass der so verkleinerte Raum kleiner als der Durchmesser der Overlocknaht (106) ist, wenn die Befestigungsvorrichtung (150) in dem Spalt (108) an ihrem Platz ist.

2. Befestigungsvorrichtung (150) nach Anspruch 1, **dadurch gekennzeichnet, dass** der Abstand zwischen dem oder den freien Enden und dem Boden (506) größer als der Durchmesser der Overlocknaht (106) ist.

3. Befestigungsvorrichtung (150) nach einem der Ansprüche 1 oder 2, **dadurch gekennzeichnet, dass** die seitlichen Wände (504a, 504b) sich vom Boden (506) aus so aufweiten, dass der Abstand zwischen den Böden der Nuten (508a, 508b) größer ist als die Breite des Spalts (108).

4. Befestigungsvorrichtung (150) nach einem der Ansprüche 1 bis 3, **dadurch gekennzeichnet, dass** sie für jede seitliche Wand (504a, 504b) einen Flügel (512a, 512b) aufweist, der sich von der Außenseite der seitlichen Wand (504a, 504b) nach außen erstreckt und in Bezug auf die Nut (508a, 508b), die sich auf derselben Außenseite befindet, auf der dem Boden (506) gegenüberliegenden Seite angeordnet ist, wobei jeder Flügel (512a, 512b) dafür vorgesehen ist, auf der Trageinrichtung (102) zur Auflage zu kommen.

5. Befestigungsvorrichtung (150) nach einem der Ansprüche 1 bis 4, **dadurch gekennzeichnet, dass** sie für jede seitliche Wand (504a, 504b) eine Extraktionsnut (514a, 514b) aufweist, die auf der Außenseite der seitlichen Wand (504a, 504b) und in Bezug auf die auf derselben Außenseite befindliche Nut (508a, 508b) oder, wenn er vorhanden ist, in Bezug auf den auf derselben Außenseite befindlichen Flügel (512a, 512b), auf der dem Boden (506) gegenüberliegenden Seite angeordnet ist.

6. Trenn- oder Schutzeinheit (100), die aufweist:
- eine Trageinrichtung (102), die aus zwei Stangen gebildet wird, die jeweils einen Spalt (108) aufweisen, der von zwei Rändern (110a, 110b) begrenzt ist,
- ein Netz (104), das eine Overlocknaht (106) aufweist, und
- für jede Stange eine Befestigungsvorrichtung (150) nach einem der vorhergehenden Ansprüche, die dazu bestimmt ist, die Overlocknaht (106) an der Stange zu befestigen.

7. Gehäuse, das ein Tor begrenzt und aufweist:
- eine Trageinrichtung (102), die zwei vertikale Stangen und eine horizontale Stange aufweist, die die beiden vertikalen Stangen miteinander verbindet, wobei jede Stange einen Spalt (108) aufweist, der von zwei Rändern (110a, 110b) begrenzt ist,
- ein Netz (104), das eine Overlocknaht (106) aufweist, und
- für jede Stange eine Befestigungsvorrichtung (150) nach einem der vorhergehenden Ansprüche 1 bis 5, die dazu bestimmt ist, die Overlocknaht (106) an der Stange zu befestigen.

8. Gehäuse nach Anspruch 7, **dadurch gekennzeichnet, dass** die Trageinrichtung (102) des Weiteren eine Basis aufweist, die auf dem Boden ruht und aus drei fest miteinander verbundenen horizontalen Stangen gebildet ist, und dadurch, dass das Gehäuse für jede der drei horizontalen Stangen eine Befestigungsvorrichtung (150) nach einem der Ansprüche 1 bis 5 aufweist, die dazu bestimmt ist, die Overlocknaht (106) an der horizontalen Stange zu befestigen.

9. Gehäuse nach einem der Ansprüche 7 oder 8, **dadurch gekennzeichnet, dass** die Trageinrichtung (102) für jede vertikale Stange ein Kniestück (600) aufweist, das die Verbindung zwischen der horizontalen Stange (604) und der vertikalen Stange sicherstellt, sowie eine Blockiereinrichtung (610), die an der Trageinrichtung (102) befestigt ist und das Ende der Befestigungsvorrichtung (150) mit der Trageinrichtung (102) sandwichartig hält.

10. Gehäuse nach Anspruch 9, **dadurch gekennzeichnet, dass** die Blockiereinrichtung (610) Einbuchtungen (612) aufweist, die jeweils das Hindurchführen einer Masche des Netzes (104) gestatten.

## Claims

1. A fastening device (150) designed to attach a net (104) comprising an overlocking member (106) to a support (102) comprising a slot (108) bounded by two edges (110a, 110b), said fastening device (150) being formed as a profiled section and comprising:
- a body (502) having two lateral walls (504a, 504b) and a base (506) connecting the two lateral walls (504a, 504b) to one another and designed to receive the overlocking member (106),
- for each lateral wall (504a, 504b), a groove (508a, 508b) extending on the outer surface of said lateral wall (504a, 504b) and designed to house one of the said edges (110a, 110b),
- at least one tongue (510a, 510b), said tongue(s) (510a, 510b) being rigid with the inner surface of a lateral wall (504a, 504b) and extending, on one hand, in the direction of the base (506) and, on the other hand, in the direction of the inner surface of the opposite lateral wall (504b, 504a) so as at least partially to close the space between the two lateral walls (504a, 504b), wherein the space reduced in this way is smaller than the diameter of the overlocking member (106) when said fastening device (150) is positioned in said slot (108).

2. A fastening device (150) according to claim 1, **characterized in that** the distance between the free end(s) and the base (506) is greater than the diameter of the overlocking member (106).

3. A fastening device (150) according to one of claims 1 or 2, **characterized in that** the lateral walls (504a, 504b) open out from the base (506) such that the distance between the edges of the grooves (508a, 508b) is greater than the width of the slot (108).

4. A fastening device (150) according to one of claims 1 to 3, **characterized in that** it comprises, for each lateral wall (504a, 504b), a tab (512a, 512b) extending externally from the outer surface of said lateral wall (504a, 504b) and being disposed on the side opposite the base (506) with respect to the groove (508a, 508b) disposed on the same outer surface, each tab (512a, 512b) being designed to bear on the support (102).

5. A fastening device (150) according to one of claims 1 to 4, **characterized in that** it comprises, for each lateral wall (504a, 504b), an extraction grove (514a, 514b) disposed on the outer surface of said lateral wall (504a, 504b) and on the side opposite the base (506) with respect to the groove (508a, 508b) disposed on the same outer surface or, when provided, with respect to the tab (512a, 512b) disposed on the same outer surface.

6. A separation or protection assembly (100) comprising:
- a support (102) formed by two bars, each having a slot (108) bounded by two edges (110a, 110b),
- a net (104) having an overlocking member (106), and
- for each bar, a fastening device (150) according to one of the preceding claims and designed to attach the overlocking member (106) to said bar.

7. A cage bounding a goal and comprising:
- a support (102) having two vertical bars and a horizontal bar connecting the two vertical bars, each bar having a slot (108) bounded by two edges (110a, 110b),
- a net (104) having an overlocking member (106), and
- for each bar, a fastening device (150) according to one of claims 1 to 5 and designed to attach the overlocking member (106) to said bar.

8. A cage according to claim 7, **characterized in that** the support (102) further comprises a base bearing on the ground and formed by three rigidly connected horizontal bars and **in that**, for each of these three horizontal bars, the cage comprises a fastening device (150) according to one of claims 1 to 5 and designed to attach the overlocking member (106) to said bar.

9. A cage according to one of claims 7 or 8, **characterized in that** the support (102) comprises, for each vertical bar, an elbow (600) connecting the horizontal bar (604) and the vertical bar, and a locking device (610) secured on the support (102) and sandwiching the end of the fastening device (150) with the support (102).

10. A cage according to claim 9, **characterized in that** the locking device (610) has indentations (612), each of which enables the passage of a mesh of the net (104).
